# EUROPÄISCHE PATENTSCHRIFT

(11) **EP 1 695 114 B1**
(45) Veröffentlichungstag und Bekanntmachung des Hinweises auf die Patenterteilung: **27.02.2008**
(21) Anmeldenummer: 04787166.0
(22) Anmeldetag: 17.09.2004
(51) Int. Cl.: G01S 15/93, G01S 13/93

(54) **VERFAHREN ZUM BEREITSTELLEN VON INFORMATIONEN ZUM PARALLEL-EINPARKEN EINES FAHRZEUGES**
METHOD FOR PROVIDING INFORMATION FOR PARALLEL PARKING OF A VEHICLE
PROCEDE POUR FOURNIR DES INFORMATIONS PERMETTANT LE STATIONNEMENT EN CRENEAU D'UN VEHICULE

(30) Priorität: 11.11.2003 DE 10352507
(43) Veröffentlichungstag der Anmeldung: 30.08.2006
(73) Patentinhaber: ROBERT BOSCH GMBH, 70442 Stuttgart (DE)
(72) Erfinder: HESS, Steffen, 74343 Sachsenheim (DE); EGELHAAF, Jan, 71229 Leonberg (DE); BELFROID-VAN DER PUTTEN, Joline, 71229 Leonberg (DE); GUELZOW, Thomas, 70825 Korntal-Muenchingen (DE)
(86) Internationale Anmeldenummer: PCT/EP2004/052230
(87) Internationale Veröffentlichungsnummer: WO 2005/047931

(56) Entgegenhaltungen:
- EP-A- 1 022 903
- DE-A- 3 844 340
- DE-A- 10 206 764
- DE-A- 19 616 447
- FR-A- 2 749 670
- GB-A- 2 319 420

## Beschreibung

### Technisches Gebiet

Die Erfindung betrifft ein Verfahren zum Bereitstellen von Informationen zum Parallel-Einparken eines Fahrzeuges gemäß dem Oberbegriff des Anspruchs 1.

### Stand der Technik

Die zunehmende Verkehrsdichte und verstärkte Bebauung freier Flächen engen den Verkehrsraum, insbesondere in Ballungszentren, kontinuierlich ein. Der zur Verfügung stehende Parkraum wird enger und die Suche nach einer geeigneten Parklücke belastet den Fahrer zusätzlich zum stetig steigenden Verkehrsaufkormmen. Insbesondere beim rückwärtigen Einparken in eine Parklücke ist es oft mit erheblichen Schwierigkeiten verbunden, die genaue Größe und Lage der Parklücke richtig einzuschätzen.

Es sind Fahrerassistenzsysteme für Fahrzeuge bekannt, welche den Fahrer bei diversen Fahrvorgängen, beispielsweise beim Rangieren oder beim Ein- und Ausparken, unterstützen. Es sind unter anderem Systeme zur Parklückenvermessung bekannt, welche den Fahrer eines Fahrzeuges bereits während der Vorbeifahrt an der Parklücke über die Größe der Parklücke in geeigneter Weise informieren, so dass der Fahrer aufgrund dieser

Information eine hinreichend sichere Entscheidung/Prognose darüber treffen kann, ob ein Einparken in diese Parklücke mit vertretbarem Aufwand möglich ist. Dabei ist es bekannt, die Größe der Parklücke mittels seitlich am Fahrzeug angeordneter Sensoren, vorzugsweise Ultraschallsensoren, zu vermessen und diesen Messwert dem Fahrer in geeigneter Form mitzuteilen.

Aus der DE 102 06 764 A1 ist ein Verfahren zum Einparken eines Fahrzeugs bekannt, bei dem sowohl Abstände des Fahrzeugs zu Hindernissen, als auch die Länge und/oder die Breite einer Parklücke bestimmt werden. Dabei werden Sensoren sowohl zur Parklückenbestimmung, als auch zur Abstandsmessung verwendet.

Aus der DE 38 44 340 A1 ist eine elektronische Mess- und Steuervorrichtung bekannt, durch die ein Kraftfahrzeug in eine Parklücke manövriert wird. Ein Sensorsystem erkennt und vermisst die geometrische Lage der Parklücke. Eine Steuereinheit berechnet optimale Manövrierparameter. Eine Ausgabeeinheit zeigt die Geometrie der Parklücke, die Fahrzeugposition und den Manövrierweg auf einem Bildschirm an.

Aus der DE 196 16 447 A1 ist ein Verfahren zur Ermittlung der Länge einer Parklücke bekannt. Von einer Sende- und Empfangseinrichtung eines Fahrzeugs werden Signalstrahlen ausgesendet, die das vordere und das hintere Ende einer Parklücke erfassen. Hierdurch wird eine Längenbestimmung der Parklücke ermöglicht.

Aus der EP 10 22 903 A2 ist eine Rückfahrunterstützungsvorrichtung bekannt, die einen Fahrer bei einem Zurücksetzen eines Fahrzeugs unterstützt. Über eine Kamera wird eine Fahrzeugumgebung erfasst. Mittels einer Bildverarbeitung wird ein geplanter Fahrweg des Fahrzeugs berechnet. Ein entsprechend geplanter Fahrweg wird einer über die Kamera aufgenommenen Fahrzeugumgebung überlagert und in einer Anzeige dargestellt.

### Darstellung der Erfindung, Aufgabe, Lösung, Vorteile

Es ist Aufgabe der vorliegenden Erfindung, ein Verfahren zum Bereitstellen von Informationen für den Fahrer eines Fahrzeuges zum Parallel-Einparken des Fahrzeuges in eine durch (mindestens) zwei Hindernisse begrenzte Parklücke anzugeben, mittels welchem der Fahrer besonders schnell und in besonders geeigneter Weise über die Länge (Größe) der Parklücke in Relation zur Länge (Größe) des Fahrzeuges informiert wird. Hierbei soll die Ablenkung des Fahrers vom Straßenverkehrsgeschehen möglichst gering gehalten werden.

Diese Aufgabe wird gelöst durch ein Verfahren mit den im kennzeichnenden Teil des Anspruchs 1 genannten Merkmalen im Zusammenwirken mit den Merkmalen im Oberbegriff. Bevorzugte Ausgestaltungen sind in den Unteransprüchen enthalten.

Dadurch, dass nach der Detektion eines ersten, die Länge der Parklücke begrenzenden Hindernisses das Fahrzeug und dessen Position in Relation zum bereits detektierten Teil der Parklücke auf einem dem Fahrer zugeordneten Display dargestellt wird, wobei das Verhältnis von Fahrzeuglänge zur Länge der Parklücke oder des detektierten Teils der Parklücke dem Verhältnis der auf dem Display dargestellten Fahrzeuglänge und der dargestellten Länge der Parklücke oder des bereits vermessenen Teils der Parklücke entspricht oder im Wesentlichen entspricht, erhält der Fahrer des Fahrzeuges bereits während der Vorbeifahrt des Fahrzeuges an der durch die zwei Hindernisse gebildeten Parklücke und damit während der Vermessung der Länge der Parklücke aufgrund der maßstabsgetreuen Darstellung eine geeignete Information über das Verhältnis von Fahrzeuglänge und Länge der Parklücke. Der entscheidende Vorteil des erfindungsgemäßen Verfahrens besteht darin, dass nicht die absolute Länge der Parklücke dem Fahrer mitgeteilt wird (optisch, akustisch oder haptisch), sondern das Verhältnis von Fahrzeuglänge und Länge der Parklücke graphisch dargestellt wird. Denn für die Entscheidung darüber, ob die zu vermessende Parklücke ausreichend groß ist oder nicht, kommt es nicht auf die absolute Länge der Parklücke, sondern lediglich auf das Verhältnis der fahrzeuglänge zur Länge der Parklücke an. Dabei ist es erforderlich, dass die Länge der Parklücke die Fahrzeuglänge übersteigt, um ein Einfahren in die Parklücke zu ermöglichen. Aufgrund der erfindungsgemäßen, maßstabsgetreuen optischen Darstellung von Fahrzeug und Parklücke sowohl während als auch nach der Parklückenvermessung, wird der Fahrer bereits während der Vorbeifahrt an der Parklücke in besonders geeigneter Weise über die Erfolgsaussichten eines Einparkvorganges informiert, wobei die Ablenkung vom Straßenverkehrsgeschehen minimal ist.

In einer bevorzugten Ausgestaltung des erfindungsgemäßen Verfahrens ist es vorgesehen, dass nach der Detektion des ersten, die Länge der Parklücke begrenzenden Hindernisses und vor der Detektion des zweiten Hindernisses die Länge des bereits vermessenen Teils der Parklücke in Relation zur für das Einparken erforderlichen Mindestlänge dargestellt wird. In einer weiteren bevorzugten Ausgestaltung des erfindungsgemäßen Verfahrens ist es vorgesehen, dass der bereits detektierte Teil der Parklücke während der Parklückenvermessung in Abhängigkeit seiner Länge in einer vordefinierten Farbe dargestellt wird. So ist es in einer besonders bevorzugten Ausführungsvariante vorgesehen, dass der während der Parklückenvermessung bereits detektierte Teil der Parklücke in roter Farbe dargestellt wird, sofern seine Länge kleiner als die Mindestlänge für das Einparken des Fahrzeuges ist. Hierdurch kann der Fahrer des Fahrzeuges allein anhand der roten Farbe während der Vorbeifahrt des Fahrzeuges an der Parklücke erkennen, dass der bisher vermessene Teil der Parklücke keine ausreichende Größe für ein Einfahren in diese Parklücke besitzt. Weist der bereits vermessene Teil der Parklücke während der Vorbeifahrt des Fahrzeuges an der Parklücke bereits eine Länge auf, welche größer oder gleich der Mindestlänge für das Einparken des Fahrzeuges in die Parklücke ist, und ist dieser bereits vermessene Teil jedoch nicht oder nur geringfügig größer als diese Mindestlänge, so dass ein bequemes Einfahren in die Parklücke nicht gewährleistet ist, ist es in einer besonders bevorzugten Ausführungsvariante vorgesehen, den bereits vermessenen Teil der Parklücke oder denjenigen Teil des bereits vermessenen Teils der Parklücke, welcher über der Mindestlänge der Parklücke liegt, in gelber Farbe darzustellen. In diesem Fall ist der Fahrer allein aufgrund der gelben Farbe darüber informiert, dass die Parklücke für ein Einfahren bereits ausreichend ist, jedoch noch keine Länge aufweist, welche ein bequemes oder einfaches Einfahren in die Parklücke (ohne mehrfaches Rangieren) ermöglicht. Weist die bereits vermessene Parklücke während der Parklückenvermessung bereits eine Länge auf, aufgrund derer ein einfaches Einfahren in die Parklücke möglich ist, wird der bereits vermessene Teil in einer bevorzugten Ausführungsvariante grün dargestellt. In diesem Fall kann der Fahrer des Fahrzeuges allein aufgrund der grünen Darstellung der Parklücke darauf schließen, dass die Parklücke eine ausreichende Länge besitzt, um in diese bequem einfahren zu können.

Analog zur vorgenannten farblichen Darstellung der Parklücke während der Parklückenvermessung ist es erfindungsgemäß vorgesehen, die Parklücke nach Detektion des zweiten, die Parklücke begrenzenden Hindernisses in Abhängigkeit ihrer Länge in einer vordefinierten Farbe darzustellen. Nach der Detektion des zweiten Hindernisses ist nun der Parklückenmessvorgang abgeschlossen und es steht die Länge der Parklücke fest. Auch jetzt kann dem Fahrer aufgrund der farblichen Darstellung bereits in schneller und einfacher Weise signalisiert werden, ob die Parklücke zu klein (rote Farbe), ausreichend - aber knapp bemessen - (gelbe Farbe) oder ausreichend für ein einfaches Einfahren (grüne Farbe) ist.

Vorzugsweise wird das Fahrzeug und der bereits vermessene Teil der Parklücke sowie die Position des Fahrzeuges in Relation zum bereits detektierten, vermessenen Teil der Parklücke in einer senkrechten Aufsicht mittels eines dem Fahrer zugeordneten Displays dargestellt. Dabei entspricht die tatsächliche Fahrtrichtung des Fahrzeuges vorzugsweise der dargestellten Fahrtrichtung des Fahrzeuges.

Nach Detektion des zweiten, die Länge der Parklücke begrenzender Hindernisses ist die Parklückenvermessung sofort wieder aktiv, um weitere Parklücken zu vermessen. Die Parklückenvermessung endet also entweder nach Detektion eines zweiten Hindernisses oder wenn die Größe der Parklücke ausreichend für einfaches Einfahren ermittelt wurde, ohne dass ein weiteres Hindernis detektiert wird. (Parklücke ist dann also nur durch ein Fahrzeug begrenzt). Auch hier ist die Parklückenvermessung sofort wieder aktiv, um weitere Parklücken zu vermessen. Weiterhin ist es erfindungsgemäß vorgesehen, dass der Fahrer die Parklückenvermessung optional auch manuell neu starten kann.

In einer weiteren bevorzugten Ausführungsvariante ist es vorgesehen, dass die Positionsdaten des Fahrzeuges sowie die Positionsdaten der Parklücke während der Parklückenvermessung gespeichert werden, so dass sich der Fahrer bei Bedarf eine vordefinierte Anzahl bereits vorher vermessener Parklücken nochmals mittels des Displays darstellen lassen kann. Dies ist insbesondere dann sinnvoll, wenn in Gebieten mit eng begrenztem Parkraumangebot mehrere Parklücken zur Verfügung stehen, welche die Mindestgröße aufweisen, jedoch knapp bemessen sind. Dann kann der Fahrer des Fahrzeuges an sämtlichen Parklücken vorbeifahren, wobei während der Vorbeifahrt die jeweilige Länge der jeweiligen Parklücke vermessen und gespeichert wird. Nun kann der Fahrer anhand der gespeicherten Parklückenvermessungen die einzelnen Parklücken auf ihre Länge hin vergleichen und sich dann für eine der Parklücken entscheiden.

### Kurze Beschreibung der Zeichnungen

Nachstehend wird die Erfindung in einem Ausführungsbeispiel anhand der beigefügten Zeichnungen näher erläutert. Es zeigen:
- Figur 1: die Darstellung von Informationen zur Parklückenvermessung nach der Erfindung zu Beginn der Parklückenvermessung in schematischer Darstellung;
- Figuren 2 und 3: die Darstellung von Informationen zur Parklückenvermessung nach der Erfindung während der Parklückenvermessung in schematischer Darstellung und
- Figuren 4 und 5: die Darstellung von Informationen zur Parklückenvermessung nach der Erfindung nach erfolgter Parklückenvermessung in schematischer Darstellung.

### Bester Weg zur Ausführung der Erfindung

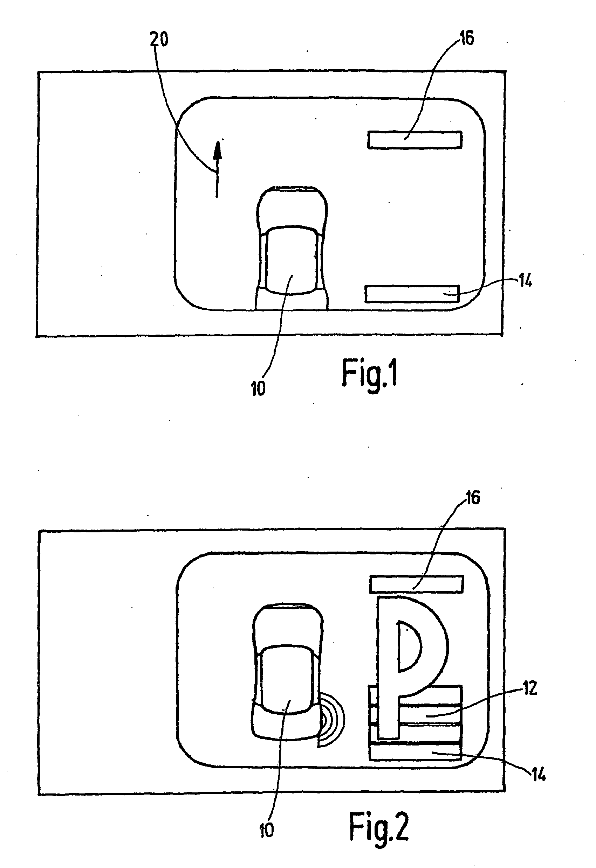

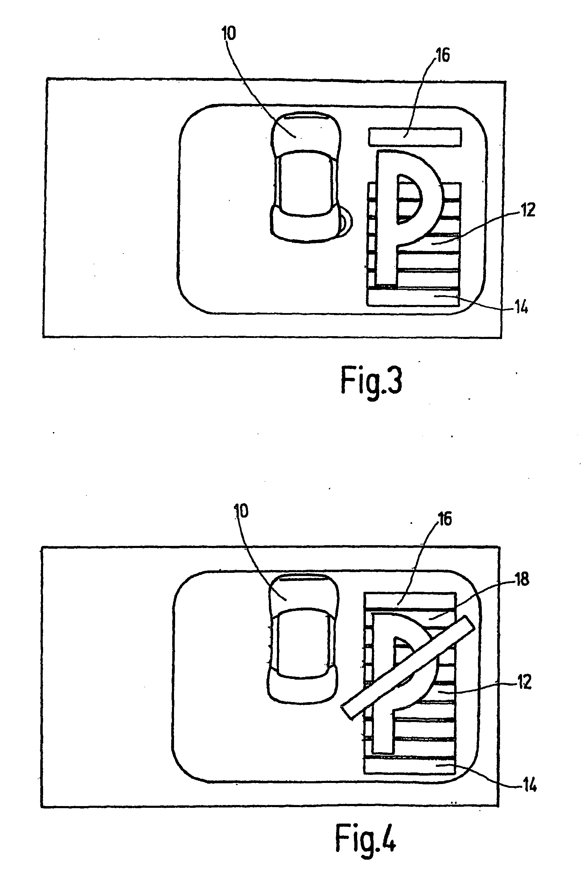

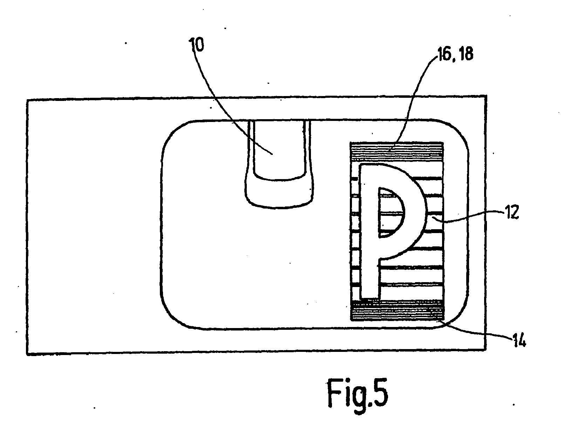

Um den Fahrer eines Fahrzeuges über die Parklückenvermessung und damit in besonders geeigneter Weise darüber zu informieren, ob die vermessene Parklücke für ein Einparken in diese Parklücke ausreichend groß ist oder nicht, ist es erfindungsgemäß vorgesehen, das Fahrzeug und dessen Position in Relation zur Parklücke oder zum bereits detektierten Teil der Parklücke auf einem dem Fahrer zugeordneten Display darzustellen. Dazu wird bei Beginn des Messvorgangs der Parklückenvermessung, das heißt bei Detektion eines ersten, die Länge der Parklücke begrenzenden Hindernisses, im Display des Fahrers das Fahrzeug 10, der Anfang der Parklücke 14, welches durch das erste Hindernis repräsentiert wird sowie die Fahrtrichtung 20 dargestellt. Weiterhin ist es vorgesehen, den Endpunkt 16 einer Parklücke mit Mindestlänge im Display darzustellen. Bereits aus dieser Darstellung kann der Fahrer des Fahrzeuges ohne einen Schulterblick, welcher eine Ablenkung vom Straßenverkehrsgeschehen bedeuten würde, entnehmen, wie weit er bereits am ersten Hindernis vorbeigefahren ist, wie in Figur 1 schematisch dargestellt ist. Dabei ist die Anordnung der für die Parklückenvermessung verwendeten Sensoren am Fahrzeug von entscheidender Bedeutung dafür, wie weit das Fahrzeug ein Hindernis bereits passiert haben muss, damit das Hindernis detektiert werden kann. Während der weiteren Vorbeifahrt des Fahrzeuges an der zu vermessenen Parklücke (Figuren 2 und 3) wird der bereits vermessene Teil 12 der Parklücke ständig dargestellt. Hierdurch wird der Fahrer des Fahrzeuges in besonders geeigneter Weise darüber informiert, wie groß der bereits vermessene Teil der Parklücke im Vergleich zu einer Parklücke mit Mindestparklänge ist, welche durch den Endpunkt 16 im Display dargestellt wird. Um den Fahrer möglichst schnell darüber zu informieren, ob die Parklücke (während oder nach ihrer Vermessung) zum Einparken des Fahrzeuges ausreicht, entspricht das Verhältnis von Fahrzeuglänge zur Länge der Parklücke beziehungsweise zum bereits vermessenen Teil der Parklücke dem Verhältnis von dargestellter Fahrzeuglänge (Fahrzeug 10) zur dargestellten (vermessenen) Parklücke beziehungsweise dem dargestellten, bereits vermessenen Teil 12 der Parklücke. Nach der Detektion des zweiten Hindernisses ist die absolute Länge der Parklücke bekannt. Nun kann dem Fahrer auch das Ende 18 der Parklücke graphisch angezeigt werden. Dabei ist es vorgesehen, sofern die Länge der Parklücke kleiner als die Mindestlänge ist (Figur 4), dies durch eine Rotfärbung der dargestellten Parklücke beziehungsweise des dargestellten Teils 12 der Parklücke anzuzeigen. Ist die Parklücke (Figur 5) jedoch ausreichend, ist es vorgesehen, die Parklücke mit grüner Farbe anzuzeigen. Sofern die Parklücke ausreichend, jedoch knapp bemessen ist, wird die dargestellte Parklücke beziehungsweise der dargestellte Teil 12 der Parklücke mit gelber Farbe dargestellt.

## Patentansprüche

1. Verfahren zum Bereitstellen von Informationen für den Fahrer eines Fahrzeuges zum Parallel-Einparken des Fahrzeuges in eine durch zwei Hindernisse in ihrer Länge begrenzte Parklücke durch Detektieren eines ersten, die Länge der Parklücke begrenzenden Hindernisses, Detektieren eines zweiten, die Länge der Parklücke begrenzenden Hindernisses sowie Bestimmen der Fahrzeugposition relativ zum ersten und zweiten Hindernis, wobei nach Detektion des.ersten Hindernisses das Fahrzeug und dessen Position in Relation zur Parklücke oder zum bereits detektierten Teil der Parklücke auf einem dem Fahrer zugeordneten Display dargestellt wird, wobei das Verhältnis von Fahrzeuglänge zur Länge der Parklücke oder des detektierten Teils der Parklücke dem Verhältnis der dargestellten Fahrzeuglänge (10) und der dargestellten Länge der Parklücke oder des bereits vermessenen Teils (12) der Parklücke entspricht oder im Wesentlichen entspricht, **dadurch gekennzeichnet, dass** nach Detektion des zweiten Hindernisses die Parklücke in Abhängigkeit ihrer Länge in einer vordefinierten Farbe dargestellt wird.

2. Verfahren nach Anspruch 1, **dadurch gekennzeichnet, dass** bis zur Detektion des zweiten Hindernisses der dargestellte, bereits detektierte Teil (12) der Parklücke in Abhängigkeit seiner Länge in einer vordefinierten Farbe dargestellt wird.

3. Verfahren nach einem der vorhergehenden Ansprüche, **dadurch gekennzeichnet, dass** das Fahrzeug und dessen Position in Relation zum bereits detektierten Teil der Parklücke in einer senkrechten Aufsicht dargestellt wird.

4. Verfahren nach einem der vorhergehenden Ansprüche, **dadurch gekennzeichnet, dass** die tatsächliche Fahrtrichtung des Fahrzeuges der dargestellten Fahrtrichtung (20) des dargestellten Fahrzeuges (10) entspricht oder im Wesentlichen entspricht.

5. Verfahren nach einem der vorhergehenden Ansprüche, **dadurch gekennzeichnet, dass** die Positionsdaten des Fahrzeuges sowie die Positionsdaten der Parklücke während der Detektion des ersten Hindernisses und der Detektion des zweiten Hindernisses gespeichert werden.

6. Verfahren nach einem der vorhergehenden Ansprüche, **dadurch gekennzeichnet, dass** nach der Detektion des ersten Hindernisses und vor der Detektion des zweiten Hindernisses die Länge des bereits vermessenen Teils der Parklücke in Relation zur für das Einparken erforderlichen Mindestlänge dargestellt wird.

## Claims

1. Method for providing information to the driver of a vehicle for parallel parking of the vehicle into a parking space which is bounded in its length by two obstacles, by detecting a first obstacle which bounds the length of the parking space and detecting a second obstacle which bounds the length of the parking space and determining the position of the vehicle in relation to the first and second obstacles, wherein, after the first obstacle has been detected, the vehicle and its position in relation to the parking space or to the part of the parking space which has already been detected is displayed on a display which is assigned to the driver, wherein the ratio of the length of the vehicle to the length of the parking space or the detected part of the parking space corresponds, or substantially corresponds, to the ratio of the displayed length (10) of the vehicle and the displayed length of the parking space or the part (12) of the parking space which has already been measured, **characterized in that** after the second obstacle has been detected, the parking space is displayed in a predefined colour as a function of its length.

2. Method according to Claim 1, **characterized in that**, until the second obstacle is detected, the displayed part (12) of the parking space which has already been detected is displayed in a predefined colour as a function of its length.

3. Method according to one of the preceding claims, **characterized in that** the vehicle and its position in relation to the part of the parking space which has already been detected are displayed in a vertical view.

4. Method according to one of the preceding claims, **characterized in that** the actual direction of travel of the vehicle corresponds, or substantially corresponds, to the displayed direction (20) of travel of the displayed vehicle (10).

5. Method according to one of the preceding claims, **characterized in that** the position data of the vehicle and the position data of the parking space during the detection of the first obstacle and the detection of the second obstacle are stored.

6. Method according to one of the preceding claims, **characterized in that**, after the first obstacle has been detected and before the second obstacle is detected, the length of the part of the parking space which has already been measured is displayed in relation to the minimum length which is necessary for parking.

## Revendications

1. Procédé pour fournir des informations au conducteur d'un véhicule pour une manoeuvre de stationnement en créneau dans un emplacement de stationnement dont la longueur est délimitée par deux obstacles, par détection d'un premier obstacle délimitant la longueur de l'emplacement, la détection d'un second obstacle délimitant la longueur de l'emplacement ainsi que la détermination de la position relative du véhicule par rapport au premier et au second obstacle, selon lequel, après détection du premier obstacle, le véhicule et sa position par rapport à l'emplacement de stationnement ou à la partie déjà détectée de l'emplacement de stationnement sont affichés sur un afficheur pour le conducteur,
le rapport entre la longueur du véhicule et celle de l'emplacement de stationnement ou de la partie détectée de l'emplacement de stationnement correspondant au rapport entre la longueur représentée du véhicule (10) et la longueur représentée de l'emplacement de stationnement ou de la partie (12) déjà mesurée de l'emplacement de stationnement ou correspond pour l'essentiel à cette longueur,
**caractérisé en ce qu'**
après détection du second obstacle, on représente l'emplacement de stationnement en fonction de sa longueur avec une couleur prédéfinie.

2. Procédé selon la revendication 1,
**caractérisé en ce que**
jusqu'à la détection du second obstacle, la partie déjà détectée (12), représentée, de l'emplacement de stationnement est affichée avec une couleur prédéfinie en fonction de sa longueur.

3. Procédé selon l'une des revendications précédentes,
**caractérisé en ce qu'**
on représente le véhicule et sa position par rapport à la partie déjà détectée de l'emplacement de stationnement selon une représentation verticale.

4. Procédé selon l'une quelconque des revendications précédentes,
**caractérisé en ce que**
la direction effective de déplacement du véhicule correspond à la direction représentée (20) du véhicule (10) représenté ou correspond pour l'essentiel à celle-ci.

5. Procédé selon l'une des revendications précédentes,
**caractérisé en ce qu'**
on mémorise les données de position du véhicule ainsi que les données de position de l'emplacement de stationnement au cours de la détection du premier obstacle et de la détection du second obstacle.

6. Procédé selon l'une des revendications précédentes,
**caractérisé en ce qu'**
après détection du premier obstacle et avant détection du second obstacle, on représente la longueur de la partie déjà mesurée de l'emplacement de stationnement par rapport à la longueur minimale nécessaire au stationnement.
